# EUROPEAN PATENT SPECIFICATION

(11) **EP 0 678 237 B1**
(45) Date of publication and mention of the grant of the patent: **21.02.2001**
(21) Application number: 95610017.6
(22) Date of filing: 18.04.1995
(51) Int. Cl.: A01D 67/00

(54) **A towed agricultural implement**
Gezogenes landwirtschaftliches Gerät
Instrument agricole tracté

(30) Priority: 21.04.1994 DK 46394
(43) Date of publication of application: 25.10.1995
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Nielsen, Harald Raun, Horuphav, DK-6470 Sydals (DK)
(74) Representative: Raffnsöe, Knud Rosenstand

(56) References cited:
- EP-A- 0 277 343
- EP-A- 0 297 012
- EP-A- 0 429 381
- WO-A-93/20680
- DE-A- 3 527 903

## Description

The present invention relates to a towed agricultural implement according to the pre-characterizing part of the claim.

The invention relates especially to a mower, comprising a draw bar pivotable about a vertical axis and working means which are supplied with power by a drive shaft extending along the draw bar, and an angular drive mounted on the agricultural implement itself, said angular drive comprising an input shaft end facing said drive shaft and an output shaft end extending substantially parallel to the swivelling axis of the draw bar.

Agricultural implements of this type are known for instance from WO-A-93/20680 and EP-A-0277343 and suffer from the drawback that it has to be ensured that the angular drive follows the swinging of the draw bar to prevent the angle between the input shaft end and the drive shaft from becoming bigger than a cardan joint allows. The two above-mentioned publications both describe mowers, in which the angular drive is mounted on the mower itself and has to be swung in time with the swinging of the draw bar, which is ensured by means of guiding structures connecting the angular drive with the draw bar.

DE Utility Model No. 8907918.3 discloses a towed mower having a draw bar pivotal about a vertical axis. A power transmission shaft is introduced into the draw bar for transfer of power to an angular drive which is mounted such that its swinging axis coincides with the swinging, the draw bar bending immediately before it reaches the gudgeon, by which it is connected with the implement.

From EP-A-0 429 383 and EP-A-0 429 381, which disclose the features of the pre-characterizing part of the claim, it is known to fully introduce the power transmission shaft into the draw bar, where also the angular drive is placed. Hereby the simultaneous pivoting of the angular drive and the draw bar is ensured such that the input shaft end points towards the transmission drive shaft, with which it is connected by a cardan joint.

The object of the present invention is to provide a different solution to the above-mentioned problem.

This object is met by an agricultural implement as defined in the claim.

The invention will be explained in detail in the following by means of embodiments and with reference to the schematic drawing, in which
Fig. 1 is a top view of a mower according to the invention,
Fig. 1a is a detail of Fig. 1 with the draw bar shown in a different position, and
Fig. 2 is a lateral view of the mower according to Fig. 1.

The drawing shows a towed mower with two working aggregates 1a,1b suspended in a carrier frame 2 provided with ground wheels 3. A draw bar 4 is pivotally connected with the carrier frame 2 by a gudgeon 5.

Transfer of power to the working aggregates 1a,1b takes place by a cardan shaft 6 extending along the draw bar 4. The cardan shaft 6 is connected with a swivel gear 7, i.e. two combined angular drives 8, 9 adapted to swing relative to each other about a common shaft pivot 10 constituted by the mutually connected output shaft end of angular drive 8 and input shaft end of angular drive 9. The swivel gear 7 has an input shaft end 11 connected with the cardan shaft 6 and an output shaft end 12, from where power is transferred trough a telescopic, second cardan shaft 13 to the input shaft end 22 of a third angular drive 21 on one of the working aggregates 1a.

The upper angular drive 8 is mounted on the draw bar 4 by means of a bracket 20 and is thus fixed relative to the draw bar 4 and the cardan shaft 6.

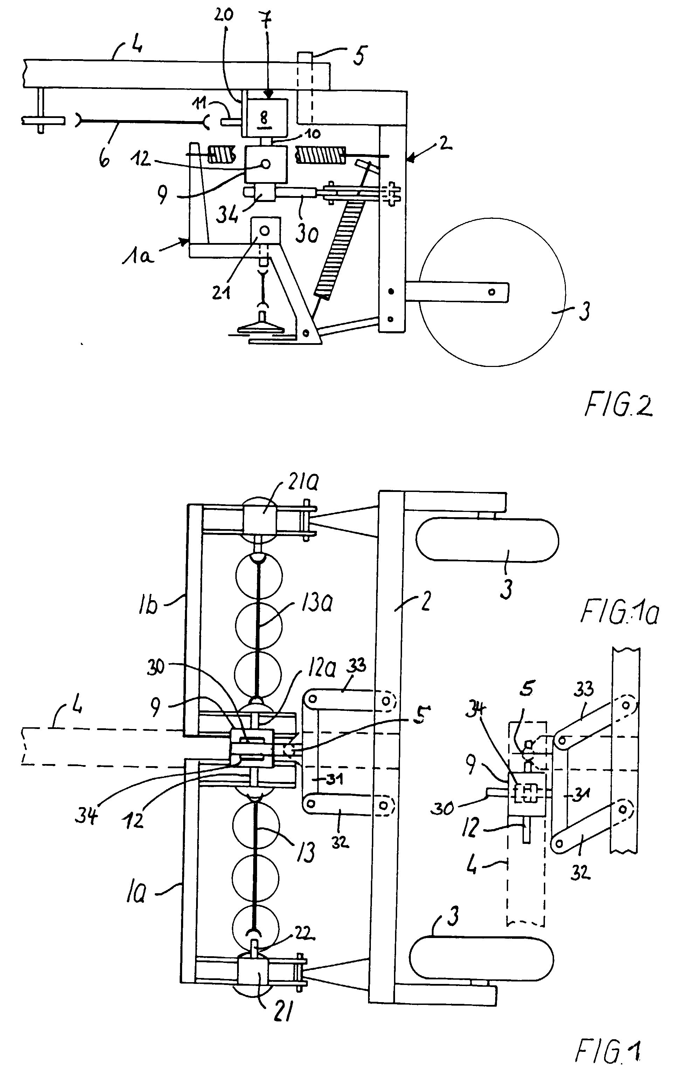

In Fig. 1, the draw bar 4, the gudgeon 5 and the part of the carrier frame 2, which carries the gudgeon, are shown in dashed line, and the upper angular drive 8 is left out in order to show the guiding mechanism more distinctly. In the embodiment shown here the lower angular drive 9 is in addition to the output shaft end 12 provided with a second output shaft end 12a in the opposite side, which through a cardan shaft 13a is connected with an angular drive 21a corresponding to the angular drive 21.

To ensure that the lower angular drive 9 is turned reversely to the movement of the draw bar 4, when the latter is swung relative to the carrier frame 2, a guiding mechanism is provided.

The guiding mechanism comprises in this embodiment a pivot 30 fixedly connected with a connection rod 31, which at its ends is connected with the carrier frame 2 by other connection rods 32, 33, whereby the three connecting rods 31-33 and the carrier frame 2 form a parallelogram. The pivot 30 is received longitudinally and pivotally around its own longitudinal axis in a bushing 34, which is fixedly connected with the lower angular drive 9.

On account of the parallelogramic construction the pivot 30 will always point in the same direction and thereby ensures that the output shaft ends 12, 12a of the lower angular drive 9 always point towards the angular drives 21, 21a, respectively. In Fig. 1 the draw bar 4 is shown extending straight ahead relative to the mover, and in Fig. 1a it is shown extending transversely to the mower. It will be seen from the two figures, how the pivot 30 moves in the bushing 34 during the swinging of the draw bar.

Due to the guiding mechanism it is attained that the angular drive 9 is always turned reversely to the draw bar 4, when it is swung, the angle between the output shaft end 12 and the cardan shaft 13 always being as small as possible.

The most important feature of the guiding mechanism is that it is capable of transferring forces as mentioned and only these forces. The concrete design may be varied within the scope of the invention.

As mentioned the guiding mechanism ensures that the angle between the output shaft end 12 and the cardan shaft 13 becomes the smallest possible. Variations of this angle and the angle between the cardan shaft 13 and the input shaft end 22 of the third angular drive 21, partly due to the swinging of the draw bar 4, partly due to the movable and resilient suspension in the carrier frame 2, are absorbed by the cardan joint of the cardan shaft 13, and similar variations of the distance between the output shaft end 12 and the input shaft end 22 of the third angular drive 21 are absorbed by the telescopic cardan shaft 13.

## Claims

1. A towed agricultural implement (1a, 1b, 2), for instance a mower, comprising a draw bar (4) pivotable about a vertical axis (5) and working means which are supplied with power by a drive shaft (6) extending along the draw bar (4), and an angular drive (8) placed at the agricultural implement (1a, 1b, 2) itself, said angular drive (8) comprising an input shaft end (11) facing said drive shaft (6) and an output shaft end (10) extending substantially parallel to the pivoting axis (5) of the draw bar (4), wherein the angular drive (8) is connected with the draw bar (4), its output shaft end (10) is connected with the input shaft end (10) of a second angular drive (9), an output shaft end (12, 12a) which through a telescopic cardan shaft (13, 13a) is connected with a third input shaft end (22) on the agricultural implement (1a, 1b, 2) itself, the first angular drive (8) carrying the second angular drive (9) such that it is pivotable about an axis which is defined by their mutually connected shaft ends (10), and guiding means are provided for securing the horizontal angle position of the second angular drive (9) relative to the agricultural implement itself, **characterized** in that the guiding means comprise a connecting rod (31) which by two other connecting rods (32, 33) is connected with the agricultural implement (2), whereby the first connecting rod (31) and the carrier frame (2) of the agricultural implement constitute horizontal, opposite sides of a parallelogram, and the other connection rods (32, 33) constitute the other opposite sides of the parallelogram, and in that the first connection rod (31) is connected, and secured against rotation in horizontal plane, with the second angular drive (9).

## Patentansprüche

1. Gezogenes landwirtschaftliches Gerät (1a, 1b, 2), wie etwa eine Mähmaschine, umfassend eine um eine senkrechte Achse (5) schwenkbare Zugstange (4) und Mähwerkzeuge, die über eine sich entlang der Zugstange (4) erstreckende Antriebswelle (6) mit Treibkraft versorgt werden, und ein beim landwirtschaftlichen Gerät (1a, 1b, 2) angeordnetes Winkelgetriebe (8), welches Winkelgetriebe (8) ein der Antriebswelle (6) zuwendendes Eingangswellenende (11) und ein im wesentlichen parallel mit der Schwenkachse (5) der Zugstange (4) verlaufendes Ausgangswellenende (10) umfasst, wobei das Winkelgetriebe (8) an die Zugstange (4) befestigt ist, und dessen Ausgangswellenende (10) mit dem Eingangswellenende (10) eines zweiten Winkelgetriebes (9) verbunden ist, dessen Ausgangswellenende (12, 12a) über eine teleskopische Kardanwelle (13) mit einem dritten Eingangswellenende (22) auf dem landwirtschaftlichen Gerät (1a, 1b, 2) verbunden ist, wobei das erste Winkelgetriebe (8) das zweite Winkelgetriebe (9) derart trägt, dass dieses über eine durch die gegenseitig verbundenen Wellenenden (10) abgegrenzte Achse drehbar ist, und Führungsmittel zum Sichern der waagrechten Winkelposition des zweiten Winkelgetriebes (9) gegenüber dem landwirtschaftlichen Gerät vorgesehen sind, dadurch **gekennzeichnet**, dass die Führungsmittel eine Verbindungsstange (31) umfassen, die über zwei andere Verbindungsstangen (32, 33) mit dem landwirtschaftlichen Gerät (2) verbunden ist, wobei die erste Verbindungsstange (31) und der Tragrahmen (2) des landwirtschaftlichen Geräts waagrechte, entgegengesetzte Seiten eines Parallelogramms bilden, und die anderen Verbindungsstangen (32, 33) die gegenüberliegenden Seiten des Parallelogramms darstellen, und dass die erste Verbindungsstange (31) an das zweite Winkelgetriebe (9) angeschlossen und gegen Rotation in waagrechter Ebene gesichert ist.

## Revendications

1. Outil agricole tracté (1a, 1b, 2), p.e. une faucheuse, comprenant un timon (4) à même de pivoter autour d'un axe vertical (5) et des organes de travail qui sont pourvus de l'énergie par un arbre de transmission (6) s'étendant au long du timon (4), et un pignon angulaire (8) disposé à l'outil agricole même (1a, 1b, 2), ledit pignon angulaire (8) comprenant un about d'arbre d'entrée (11) en face dudit arbre de transmission (6) et un about d'arbre de sortie (10) s'étendant essentiellement parallèlement à l'axe de pivotement (5) du timon (4), où le pignon angulaire (8) est relié au timon (4), son about d'arbre de sortie (10) est relié à l'about d'arbre d'entrée (10) d'un deuxième pignon angulaire (9), un about d'arbre de sortie (12, 12a) qui par un arbre de cardan télescopique (13, 13a) est relié à un troisième about d'arbre d'entrée (22) sur l'outil agricole (1a, 1b, 2) même, le premier pignon angulaire (8) supportant le deuxième pignon angulaire (9) si bien qu'il peut pivoter autour d'un axe déterminé par leurs abouts d'arbre l'un relié à l'autre (10), et des moyens de guidage sont pourvus pour assurer la position angulaire horizontale du deuxième pignon angulaire (9) par rapport à l'outil agricole même, **caractérisé** en ce que les moyens de guidage comprennent une bielle (31) qui par deux autres bielles (32, 33) est relié à l'outil agricole (2), la première bielle (31) et le châssis (2) de l'outil agricole formant les côtés opposés horizontaux d'un parallélogramme, et les autres bielles (32, 33) formant les autres côtés opposés du parallélogramme, et en ce que la première bielle (31) est reliée, et fixée contre rotation dans le plan horizontal, au deuxième pignon angulaire (9).
